# EUROPEAN PATENT APPLICATION

(11) **EP 2 055 419 A1**
(43) Date of publication of application: **06.05.2009**
(21) Application number: 08251752.5
(22) Date of filing: 20.05.2008
(51) Int. Cl.: B23K 1/00, B23K 1/19, B23K 1/20, B23K 35/26, B23K 35/36, C23C 18/32, C23C 18/50, C23C 18/54

(54) **Method of soldering a magnesium alloy workpiece with electroless plating with Nickel-Phosphrous, fluxing and use of a leadfree tin alloy solder**

(30) Priority: 05.11.2007 TW 96141635
(71) Applicant: Magtech Technology Co., Ltd, Taipei Hsi 236 (TW)
(72) Inventor: Ho, Climent, Wushan Dist. Taipei (TW)
(74) Representative: Gee, Steven William

(57) **Abstract**

The present application relates to a method of soldering a magnesium alloy workpiece. The method includes providing a magnesium alloy workpiece; modifying a surface of the magnesium alloy workpiece; performing a high phosphorous (7 to 12 wt% of P) electroless nickel plating process on the surface of the magnesium alloy workpiece; preparing a solder flux for different lead-free tin alloy solder; and performing a tin soldering process to solder the magnesium alloy workpiece with the lead-free tin alloy solder containing its corresponding solder flux.

## Description

### BACKGROUND OF THE INVENTION

### 1. Field of the Invention

The present invention relates to a method for soldering a magnesium alloy workpiece.

### 2. The Prior Arts

The present invention provides a method for soldering a magnesium alloy workpiece, which is an improvement on the method of Taiwanese Patent Application No. 095117849.

Magnesium alloy workpiece has a thermal expansion coefficient which is about 2 to 3 times higher than other common metals. As such, a magnesium alloy workpiece is very sensitive to the heat treatment. An uneven heat treatment may likely generate a deformation and an internal stress on the magnesium alloy workpiece. On the other hand, if the magnesium alloy workpiece is heat-treated at very high temperature, the segregation may occur therein so that the characteristic of the magnesium alloy workpiece may change. Therefore, the conventional hot soldering methods (soldering at a temperature higher than the melting point of the material) are believed not suitable for a magnesium alloy workpiece, especially not suitable for a thin plate of magnesium alloy workpiece. Generally, the cold soldering methods (soldering at a temperature lower than melting point of the material) are believed better than hot soldering methods when a thin plate of magnesium alloy workpiece is soldered. Unfortunately, such cold soldering methods used for soldering a thin plate of magnesium alloy workpiece are not thoroughly developed.

US Patent No. 4,613,069 (Falke et al.) taught that magnesium alloys were soldered by means of a tin-lead system following initial application of a thin coating of nickel-copper alloy. However, the erosion to the magnesium alloy workpiece caused by solder flux used in the process is not considered.

US Patent No. 4,925,084 (Persson) taught a method of explosion soldering magnesium-alloyed aluminium to high strength material. However, this method is restricted to apply to magnesium-alloyed aluminium having a superplastic capability, and the shape and the manufacturing cost of the workpiece are also restricted.

US Patent No. 4,739,920 (Kujas) taught that as essential constituents, stearic acid, palmitic acid, and oleic acid were used as a solder flux to bond aluminum to electro-deposited sheet of aluminum, magnesium, or alloys thereof. However, the erosion to the magnesium alloy workpiece caused by the solder flux is also not considered.

### SUMMARY OF THE INVENTION

An objective of the present invention is to provide a process for electroless plating nickel on the surface of the magnesium alloy so that the modified surface of the magnesium alloy is suitable for cold soldering.

Another objective of the present invention is to provide a solder flux with a lead-free tin alloy solder so that the magnesium alloy can be cold soldered.

In order to achieve the above objectives, a method for soldering a magnesium alloy workpiece is provided. The method includes providing a magnesium alloy workpiece; modifying a surface of the magnesium alloy workpiece; performing a high phosphorous (7 to 12 wt% of P) electroless nickel plating process on the surface of the magnesium alloy workpiece; preparing a solder flux for different lead-free tin alloy solder; and performing a tin soldering process to solder the magnesium alloy workpiece with the lead-free tin alloy solder containing its corresponding solder flux.

In the step of performing the high phosphorous (7 to 12 wt% of P) electroless nickel plating process on the surface of the magnesium alloy workpiece, a composition is used for performing the high phosphorous (7 to 12 wt% of P) electroless nickel plating process, which comprises water, fluorine ions, ammonium ions, nickel ions, hypophosphorate ions, a complexing agent, and a C2 to C8 organic acid ions (such as citric acid ions) as a buffer agent, wherein the complexing agent is selected from the group consisting of diethylenetriamine, ethylenediamine, triethylene-tetramine, and a combination thereof, wherein the composition is maintained at a temperature in a range of 80 to 97°C, and its pH value is in a range of 3 to 4, wherein the concentration of the fluorine ions, the ammonium ions, the nickel ions, the hypophosphorate ions, the complexing agent, and the organic acid ions are 0.35-0.53M, 0.35-0.53M, 0.13-0.15M, 0.1-0.2M, 0.005-0.01M, and 0.07-0.1M, respectively. The tin soldering process is performed with a lead-free tin alloy solder which is selected from the group consisting of a tin silver copper alloy solder and a tin bismuth alloy solder. The tin soldering process comprises a fusing soldering process, or a reflowing process.

As to the electroless nickel plating process, because of the wetting ability and interfacial reaction between an electroless nickel plating layer and a tin solder, the joint betweenthere is usually reliable. Therefore, the electroless nickel plating layer often plays an important role as an anti-diffusion insulating layer and a wetting layer in a tin soldering art. The electroless nickel plating layer with higher phosphorous content exhibits a better wetting ability with the lead-free tin solder composed of pure tin, eutectic tin-silver-copper and eutectic tin-bismuth. Comparing with the eutectic tin-silver solder, the pure tin solder exhibits a better wetting ability with the electroless nickel plating layer, while the eutectic tin-bismuth solder exhibits a relatively poor wetting ability comparing with the other two. Further, in general, when the phosphorous content in the electroless nickel plating layer is more than 9 wt%, each of the three aforementioned lead-free tin solders can achieve a better wetting ability. However, nickel oxide is often formed on the surface of the electroless nickel plating layer, and if the nickel oxide is not pre-removed by a solder flux, it would not be wetted between the tin solder and the electroless nickel plating layer, and thereby the bondability therebetween would be very poor. When a solder flux is used to pre-remove the nickel oxide, the wetting ability of the electroless nickel plating layer will be greatly improved. However, the situation for the magnesium alloy workpieces becomes more complicated. Unless the electroless nickel plating layer has an enough thickness (typically greater than 20 µm), most of the electroless nickel plating layer would be distributed with residual micro-holes. When the surface of the workpiece is observed with Energy Dispersive X-ray (EDX), it can be observed a certain amount of oxide, hydroxide, and carbonate of magnesium formed thereon. These compounds of magnesium must be removed together with nickel oxide.

Further, with respect to an interfacial reaction, it is found that there is the intermetallic compound (IMC) Ni₃Sn₄ formed on the soldering interface between the 42tin-58bismuth solder paste and electroless nickel plating layer having a medium phosphorous content (Ni-5.52 wt% of P). Such formed intermetallic compound is often the causation of fatigue fracture. However, there is no such an intermetallic compound (IMC) Ni₃Sn₄ formed on the soldering interface between the electroless nickel plating layer having a high phosphorous content (Ni-9.12 wt% of P) and the electroplating nickel layer when the electroless nickel plating layer has a high phosphorous content (Ni-9.12 wt% of P). Accordingly, this is the reason why an electroless nickel plating layer having a high phosphorous content is selected for cold soldering the magnesium alloy workpiece in the present invention. Furthermore, When the temperature is risen during soldering, the electroless nickel plating layer having a high phosphorous content exhibits a compressive stress, but the electroless nickel plating layer having a medium phosphorous content exhibits a tensile stress. Therefore, the electroless nickel plating layer having a high phosphorous content can present a better bondability.

A solder for cold soldering generally includes two main ingredients. One of main ingredients is a soldering alloy. Some lead-free tin soldering alloys for cold soldering are proposed by following worldwide organizations as: (1) tin 95.5/silver 3.9/copper 0.6 proposed by U.S. NEMI committee; (2) tin 96.5/silver 3.0/copper 0.5 proposed by Japan JEITA committee; and (3) tin 96.5/silver 3.8/copper 0.7 proposed by Europe IDEALS, each of which can have a melting temperature varying in the range of 217 ±4°C according to the variation of the ingredients thereof; and further, (4) Sn 42/Bi 58 having a melting temperature of 139°C proposed by U.S. NEMI committee. Although an increase of the copper content in tin soldering alloys may also increase the risk of electric couple corrosion of the magnesium alloy, the copper content is relative low and tends to form an alloy with the tin, and therefore the electric couple is not found to be corroded during a thermal cycle test and an endurance test. Therefore, all of the foregoing four solders are tested by the embodiment of the present invention.

Another main ingredient of the solder for cold soldering is solder flux. Currently there are many solder fluxes available in the market, all of which are formulated basically with carrier materials, activator, solvent, and wetting agent. Activator in such a solder flux is often released by pre-heating the solder flux, and cleans a small amount of oxide and contaminate from the surface to be soldered by reducing the oxide which is to be removed. In such a way, IMC is formed at the solder / the surface to be soldered interface, which is assessed to be a sign of good connection between the solder and the surface to be soldered. However, there are still three difficulties to be overcome for the magnesium alloy workpiece. The first one is that magnesium alloy is too active, and therefore the corrosion by acid or salt released from the activator ingredients of the solder flux must be avoided. The second difficulty is that when cold soldering, the magnesium alloy workpiece must be passivated in time, so as to avoid the generation of magnesium alloy oxide film on the IMC. The third difficulty is that the alkaline magnesium alloy oxide can produce a large amount of dross on the melted solder flux which should be blown by a large amount of blowing air. These three difficulties are solved respectively by the embodiment of the present invention as follows:

Firstly, an oil-soluble chelating agent (chelant hereinafter) which is suitable for dissolving and removing oxide, hydroxide, and carbonate of magnesium and nickel is introduced into the solder flux. The chelant can be a product of an acid-base neutralization of a succinic acid, an itaconic acid, an adipic acid, a glutaric acid, an azelaic acid, a sebacic acid, a 2-butyloctanoic acid, a 2-butyldecanoic acid, a 2-hexyldecanoic acid, and of a citric acid with diethylenetriamine, an ethylenediamine, or a triethylene-tetramine. A pH range achieved by the neutralization is 8 to 11 for avoiding the corrosion of the magnesium alloy. The chelant is added in amount of 0.1 to 0.5 meq/kg flux.

Secondly, a passivation agent is added into the solder flux. The anions having passivation capability for providing a temporary passivation protection to the surface of magnesium or nickel are provided so as to endure the operation condition of easy oxidation at the high temperature during soldering. The anions can be fluorine ions, silicate ions, molybdate ions, aluminate ions, vanadate ions. The anions are added in amount of 0.01 to 0.05 mol/kg flux.

Thirdly, a volatile agent is added into the solder flux. The volatile agent is gasified when the temperature is increased to a certain degree. When such a volatile agent is gasified, it releases an inert gas to blow the melting dross on the surface of the solder flux from the operation region. Such a volatile agent can be hydrazine (which can release nitrogen when heated), hydroxylamine hydrofluoride (which can release ammonia when heated), and melamine phosphate (which can release ammonia when heated). The volatile agent is added in a certain amount so as to generate gas of 0.1 to 0.5 mol/kg flux.

### DETAILED DESCRIPTION OF THE PREFERRED EMBODIMENT

A magnesium alloy AZ31 plate sample with a thickness of 0.4 mm is hot rolled for testing. The copper-made nut with a 3mm external diameter is soldered onto the AZ31 plate sample. The detailed process can be referred to the first embodiment of TW Patent Application No. 095117849. When the test is processed to the step of the first electroless nickel plating (during which the plate sample is called testing plate A), the sample A is directly put into a high phosphorous electroless nickel plating processing tank having an operation condition as shown in Fig. 1 to perform a chemical deposition of nickel therein (during which the plate sample is called testing plate B).

Table 1 shows operation conditions for high phosphorous electroless nickel plating.

**Table 1**

| Tensile type high phosphorous electroless nickel plating | | | |
|---|---|---|---|
| ingredient | amount | Operation condition | range |
| Ammonium Fluoride | 20∼30 g/Ltr | temperature | 80∼97°C |
| Diethylenetriamine | 0.5∼1.0 g/Ltr | Operation time | 15 min |
| Nickel carbonate | 25∼30 g/Ltr | pH value | 3.0∼4.0 |
| Citric acid | 15∼20 g/Ltr | Stirring | Air stirring |
| sodium hypophosphite | 10∼20 g/Ltr | | |

The solder paste is prepared by mixing a commercial solder flux product (alpha 100T2) with its corresponding tin alloy particles. Then the nut is soldered to the magnesium alloy AZ31 plate sample with the solder listed in Table 2 by the reflow soldering process. A tension test is then performed to the soldered workpiece, and the result is listed in Table 2.

**Table 2**

| | solder A | | solder B | | solder C | | solder D | |
|---|---|---|---|---|---|---|---|---|
| | testing plate A | testing plate B | testing plate A | testing plate B | testing plate A | testing plate B | testing plate A | testing plate B |
| FLUX0 | • | • | • | • | • | • | • | • |
| tension strength | -- | -- | -- | -- | -- | -- | -- | -- |
| FLUX1 | • | ○▲◆■ | • | ○▲◆■ | • | ○▲◆■ | • | ○▲◆■ |
| tension strength | -- | 110 | -- | 106 | -- | 142 | -- | 135 |
| FLUX2 | • | • | • | • | • | • | • | • |
| tension strength | -- | -- | -- | -- | -- | -- | -- | -- |
| FLUX3 | • | • | • | • | • | • | • | • |
| tension strength | -- | -- | -- | -- | -- | -- | -- | -- |
| FLUX12 | • | ○△◆□ | • | ○△◆□ | • | ○△◆□ | • | ○△◆□ |
| tension strength | -- | 185 | -- | 196 | -- | 212 | -- | 235 |
| FLUX13 | • | ○▲◊■ | • | ○▲◊■ | • | ○▲◊■ | • | ○▲◊■ |
| tension strength | -- | 150 | -- | 147 | -- | 196 | -- | 216 |
| FLUX23 | • | • | • | • | • | • | • | • |
| tension strength | -- | -- | -- | -- | -- | -- | -- | -- |
| FLUX123 | • | ○△◊□ | • | ○△◊□ | • | ○△◊□ | • | ○△◊□ |
| tension strength | -- | 273 | -- | 287 | -- | 301 | -- | 296 |

| | | | | | | | | |
|---|---|---|---|---|---|---|---|---|
| Notes: 1. Solder A: tin 95.5/silver 3.9/copper 0.6 alloy 2. Solder B: tin 96.5/silver 3.0/copper 0.5 alloy 3. Solder C: tin 96.5/silver 3.8/copper 0.7 alloy 4. Solder D: tin 42/bismuth 58 alloy 5. FLUX0: alpha 100T2, provided by Alpha metals Ltd. 6. FLUX1: alpha 100T2 blended with 5% of succinic acid chelant 7. FLUX2: alpha 100T2 blended with 1% of ammonium fluoride passivation agent 8. FLUX3: alpha 100T2 blended with 2% of melamine phosphate volatile agent 9. FLUX12: alpha 100T2 blended with 5% of succinic acid chelant and 1% of ammonium fluoride passivation agent 10. FLUX13: alpha 100T2 blended with 5% of succinic acid chelant and 2% of melamine phosphate volatile agent 11. FLUX23: alpha 100T2 blended with 1% of ammonium fluoride passivation agent, and 2% of melamine phosphate volatile agent 12. FLUX123: alpha 100T2 blended with 5% of succinic acid chelant, 1% of ammonium fluoride passivation agent, and 2% of melamine phosphate volatile agent 13. Tension strength unit: kgf/cm² ○ : wetting, and soldering completed • : non-wetting, and soldering failed △ : no corrosion ▲ : corrosion ◊ : no skip soldering or false soldering ◆ : skip soldering or false soldering □ : no gradual corrosion for 60 days ■ : gradual corrosion for 60 days | | | | | | | | |

Although the present invention has been described with reference to the preferred embodiments thereof, it is apparent to those skilled in the art that a variety of modifications and changes may be made without departing from the scope of the present invention which is intended to be defined by the appended claims.

## Claims

1. A method for soldering a magnesium alloy workpiece, comprising:
providing a magnesium alloy workpiece;
modifying a surface of the magnesium alloy workpiece;
performing a high phosphorous (7 to 12 wt% of P) electroless nickel plating process on the surface of the magnesium alloy workpiece;
preparing a solder flux for different lead-free tin alloy solder; and
performing a tin soldering process to solder the magnesium alloy workpiece with the lead-free tin alloy solder containing its corresponding solder flux.

2. The method according to claim 1, wherein in the step of performing the high phosphorous (7 to 12 wt% of P) electroless nickel plating process on the surface of the magnesium alloy workpiece, a composition is used for performing the high phosphorous (7 to 12 wt% of P) electroless nickel plating process, which comprises water, fluorine ions, ammonium ions, nickel ions, hypophosphorate ions, a complexing agent, and a C2 to C8 organic acid ions as a buffer agent, wherein the complexing agent is selected from the group consisting of diethylenetriamine, ethylenediamine, triethylene-tetramine, and a combination thereof.

3. The method according to claim 2, wherein the organic acid ions are citric acid ions.

4. The method according to claim 2, wherein the composition is maintained at a temperature in a range of 80 to 97 °C, and its pH value is in a range of 3 to 4, wherein the concentration of the fluorine ions, the ammonium ions, the nickel ions, the hypophosphorate ions, the complexing agent, and the organic acid ions are 0.35-0.53M, 0.35-0.53M, 0.13-0.15M, 0.1-0.2M, 0.005-0.01M, and 0.07-0.1M, respectively.

5. The method according to claim 1, wherein the tin soldering process is performed with a lead-free tin alloy solder which is selected from the group consisting of a tin silver copper alloy solder and a tin bismuth alloy solder.

6. The method according to claim 1, wherein the tin soldering process comprising a fusing soldering process, or a reflowing process.

7. The method according to claim 1, wherein the solder flux is used for dissolving and removing oxide, hydroxide, and carbonate of magnesium and nickel, and the solder flux includes an oil-soluble chelating agent, wherein the oil-soluble chelating agent is a product of a acid-base neutralization of a succinic acid, an itaconic acid, an adipic acid, a glutaric acid, an azelaic acid, a sebacic acid, a 2-butyloctanoic acid, a 2-butyldecanoic acid, a 2-hexyldecanoic acid, and of a citric acid with diethylenetriamine, an ethylenediamine, or a triethylene-tetramine, wherein a pH range achieved by the neutralization is within a range of 8 to 11, and the oil-soluble chelating agent is added in an amount of 0.1 to 0.5 meq/kg flux.

8. The method according to claim 1, wherein the solder flux is prepared for providing a temporary passivation protection to the surface of magnesium or nickel so as to endure the operation condition of easy oxidation at high temperature during soldering, wherein the solder flux is added with anions having a passivation capability, the anions being selected from fluorine ions, silicate ions, molybdate ions, aluminate ions, vanadate ions, and the anions being added in an amount of 0.01 to 0.05 mol/kg flux.

9. The method according to claim 1, wherein the solder flux is prepared for releasing an inert gas at soldering operation temperature so as to blow a melting dross on a surface of the solder flux from the operation region, wherein the solder flux is added with a volatile agent which is gasified when the temperature is increased to a certain degree, wherein the volatile agent is selected from a group consisting of hydrazine, hydroxylamine hydrofluoride, and melamine phosphate, the volatile agent being added in a certain amount so as to generate a gas of 0.1 to 0.5 mol/kg flux.
